# EUROPEAN PATENT SPECIFICATION

(11) **EP 3 880 050 B1**
(45) Date of publication and mention of the grant of the patent: **29.06.2022**
(21) Application number: 20800686.6
(22) Date of filing: 09.11.2020
(51) Int. Cl.: A47J 43/07

(54) **KITCHEN APPLIANCE ACCESSORY AND KITCHEN APPLIANCE**
KÜCHENGERÄT UND ZUBEHÖRTEIL DAFÜR
APPAREIL DE CUISINE ET ACCESSOIRE CORRESPONDANT

(30) Priority: 11.11.2019 WO PCT/CN2019/117218; 26.11.2019 EP 19211551
(43) Date of publication of application: 22.09.2021
(73) Proprietor: Koninklijke Philips N.V., 5656 AG Eindhoven (NL)
(72) Inventor: JIANG, Ou, 5656 AE Eindhoven (NL)
(74) Representative: de Vries, Janna
(86) International application number: PCT/EP2020/081457
(87) International publication number: WO 2021/094244

(56) References cited:
- EP-A1- 2 005 869
- WO-A1-2016/120021
- CN-B- 103 976 667
- US-A1- 2014 286 123

## Description

### FIELD OF THE INVENTION

The present invention relates to a kitchen appliance comprising a main body and a kitchen appliance accessory for engaging with the main body, the kitchen appliance accessory comprising a first housing portion and a second housing portion lockable onto the first housing portion.

### BACKGROUND OF THE INVENTION

Many kitchen appliances such as food processors and blenders may be used in conjunction with detachable and interchangeable kitchen appliance accessories in order to increase the functionality of such kitchen appliances. Such a kitchen appliance accessory may be locked into place on the main body of the kitchen appliance such that the motor of the kitchen appliance can be used to operate the kitchen appliance accessory, for example by driving a blade arrangement, a whisk or the like mounted within the kitchen appliance accessory.

Such kitchen appliance accessories commonly comprise two housing portions that cooperate to form a food processing chamber in which a food product processed whilst the kitchen appliance accessory is engaged with the kitchen appliance. The two housing portions for example may comprise a first housing portion acting as a cup or the like and a second housing portion in which a food processing arrangement such as a blade arrangement, a whisk or the like is mounted. The first housing portion typically can be separated or disengaged from the second housing portion for cleaning purposes for example. To this end, the first housing portion and second housing portion typically comprise complementary parts of an engagement mechanism through which the first housing portion and the second housing portion may be engaged with each other during use of the kitchen appliance accessory on the kitchen appliance.

For example, CN 103099550 A discloses a food processor locking mechanism comprising a first structure part, a second structure part and a connection part, wherein the connection part is respectively in screw connection with the first structure part and the second structure part in a mode convenient to separate, and the first structure part and the connection part can form a first structure assembly. The food processor locking mechanism further comprises a locking block installed on the connection part, wherein the locking block comprises three working positions of an initial position, a first position and a second position. When the connection part is separated from the first structure part and the second structure part, the locking block is arranged at the initial position. When the first structure part and the connection part are in a screw connection state, the locking block leaves a support structure of the connection part to move to the first position to be matched with and fixedly connected with a location structure of the first structure part. When the first structure assembly and the second structure part are in a connection state, the locking block is positioned at the second position. The document US 2014/286123 discloses a further kitchen appliance.

A problem with such engagement mechanisms is that the first housing portion may be accidentally disengaged from the second portion during use of the kitchen appliance accessory of the kitchen appliance, for instance by vibrations generated by a motor of the kitchen appliance in operation. This therefore can lead to an undesirable situation when a user attempts to remove the kitchen appliance accessory from the kitchen appliance, the first housing portion becomes separated from the second housing portion, thereby potentially spilling at least part of the contents of the processed food product within the kitchen appliance accessory. Such spillage in itself is undesirable and can also lead to ingress of such a food product into the kitchen appliance, thereby potentially damaging the kitchen appliance.

### SUMMARY OF THE INVENTION

The present invention seeks to provide a kitchen appliance accessory in which accidental disengagement of the two housing portions during use of the kitchen appliance accessory on the kitchen appliance is avoided.

The present invention further seeks to provide a kitchen appliance including such a kitchen appliance accessory.

According to an aspect, there is provided a kitchen appliance comprising a main body and a kitchen appliance accessory for engaging with the main body , the kitchen appliance accessory comprising a first housing portion comprising an inner surface carrying first slanted engagement members and an outer surface carrying a plurality of locking ribs for locking the kitchen appliance accessory onto the main body of the kitchen appliance, and a second housing portion comprising an outer surface carrying further slanted engagement members and a bottom surface opposing a main surface of said main body and separated from said main surface by a clearance having a clearance height when the kitchen appliance accessory is locked onto said main body,
wherein the second housing portion is rotatably lockable onto the first housing portion by engagement of the first slanted engagement members with the further slanted engagement members, said engagement causing a vertical displacement of the second housing portion towards the first housing portion by a vertical displacement distance exceeding said clearance height.

The slanted nature of the engagement members ensures that the second housing portion has to move towards the first housing portion by a vertical displacement distance that typically is defined as the height difference between the start point and the end point of at least one of the slanted engagement members. Moreover, as the kitchen appliance accessory is typically designed for use with a particular make and model of kitchen appliance, the clearance height between the bottom surface of the kitchen appliance accessory and an opposing main surface of the body of the kitchen appliance is well-known such that the vertical displacement distance can be designed to exceed this clearance height. Consequently, when the kitchen appliance accessory is assembled prior to locking the kitchen appliance accessory onto the kitchen appliance, the second housing portion cannot accidentally disengage from the first housing portion due to the fact that the first housing portion cannot move relative to the kitchen appliance as its locking ribs are engaged with the body of the kitchen appliance and the second housing portion cannot move far enough downward for the second housing portion to disengage from the first housing portion because the second housing portion runs into the main surface of the body of the kitchen appliance before it has fully disengaged from the first housing portion.

In an example embodiment, a first slanted engagement member comprises one of a slanted locking rib and a slanted locking slot for receiving said slanted locking rib and a further slanted engagement member comprises the other of said slanted locking slot and said slanted locking rib. Such a slanted locking rib typically is designed to slide into the slanted locking slot, such that through rotation or twisting of the second housing portion relative to the first housing portion the slanted locking rib travels upwards through the slanted locking slot, thereby bringing the second housing portion closer to the first housing portion, i.e. vertically displacing the second housing portion towards the first housing portion.

To this end, the slanted locking slot may comprise an opening for receiving the slanted locking rib and an end point for engaging with said slanted locking rib at completion of said engagement, wherein the end point is laterally displaced relative to said opening and longitudinally separated from said opening by said vertical displacement distance. Such an end point for instance may be used to prevent overtightening of the first and second housing portions during their engagement.

In a particular embodiment, the slanted locking slot comprises one of a tongue and a groove for receiving said tongue at said end point, and the slanted locking rib comprises the other of said tongue and said groove. The engagement of the tongue and groove at the end point of the engagement process between the first housing portion and the second housing portion further reduces the risk of accidental partial disengagement of the second housing portion from the first housing portion during use of the kitchen appliance accessory on the kitchen appliance, as additional force is required to start the disengagement of the second housing portion from the first housing portion, i.e. to release the tongue from the groove.

In an example embodiment, the slanted locking slots are arranged on the inner surface of the first housing portion and the slanted locking ribs are arranged on the outer surface of the second housing portion. This is particularly user-friendly where the kitchen appliance accessory is assembled in an upside down fashion, i.e. by holding the first housing portion and twisting the second housing portion into place on top of the first housing portion, as this ensures that the slanted locking ribs are easily (downwardly) inserted into the slanted locking slots.

A difference between said clearance height (B) and said vertical displacement distance (A) may be in a range of 0.2 - 0.6 mm. This ensures that the required vertical displacement of the second housing portion towards the first housing portion during their engagement is as small as possible without risking accidental disengagement, thereby improving user-friendliness of the kitchen appliance accessory.

The first housing portion may be a cup for receiving a food product and/or the second housing portion may contain a blade arrangement to be driven by a motor within the kitchen appliance, with the bottom surface of said second housing portion comprising a coupling member coupled to said blade arrangement for engaging with said motor. Such a kitchen appliance accessory for example may be a mill accessory, e.g. for milling food products such as nuts, herbs, vegetables and so on.

In an example embodiment, the main body has a recess for receiving the kitchen appliance accessory of any of the herein described embodiment. Such kitchen appliance may be used with the kitchen appliance accessory without the risk of accidental disengagement of the second housing portion from the first housing portion during such use, thereby offering a kitchen appliance with an improved design.

The recess of the main body may comprise a main surface facing the bottom surface of the second housing portion and being separated therefrom by said clearance height when said kitchen appliance accessory is locked into the kitchen appliance, such that the main surface prevents accidental disengagement of the second housing portion from the first housing portion during use of the kitchen appliance accessory on the kitchen appliance as previously explained.

The recess may comprise a locking structure on an inner surface of said recess for engaging with the locking ribs on the kitchen appliance accessory for locking the kitchen appliance accessory into said recess. This prevents vertical displacement of the first housing portion of the kitchen appliance accessory relative to said recess during use of the kitchen appliance accessory on the kitchen appliance, thereby ensuring that accidental disengagement of the second housing portion from the first housing portion during such use is prevented as the clearance height between the kitchen appliance accessory and the main surface of the kitchen appliance remains unchanged during such use.

In an example embodiment, the locking structure comprises a plurality of locking channels such that the kitchen appliance accessory can be locked into place in the recess of the kitchen appliance by engaging the locking ribs of the kitchen appliance with the locking channels.

The kitchen appliance may further comprise a first coupling in said recess coupled to a motor of the kitchen appliance, wherein said first coupling is arranged to engage with the coupling member of the bottom surface of the second housing portion of the kitchen appliance accessory such as to drive the blade arrangement of the kitchen appliance accessory with said motor.

Although the kitchen appliance may take any suitable form, in a preferred embodiment the kitchen appliance is a blender or a food processor.

### BRIEF DESCRIPTION OF THE DRAWINGS

Embodiments of the invention are described in more detail and by way of nonlimiting examples with reference to the accompanying drawings, wherein:
FIG. 1 schematically depicts a perspective view of a kitchen appliance according to an example embodiment;
FIG. 2 schematically depicts a perspective view of a kitchen appliance accessory according to an example embodiment;
FIG. 3 schematically depicts a perspective view of an engagement between the kitchen appliance of FIG. 1 and the kitchen appliance accessory of FIG. 2;
FIG. 4 schematically depicts a cross-sectional view of the engagement between the kitchen appliance of FIG. 1 and the kitchen appliance accessory of FIG. 2;
FIG. 5 schematically depicts a perspective view of a part of a kitchen appliance accessory according to an example embodiment;
FIG. 6 schematically depicts a perspective view of another part of a kitchen appliance accessory according to an example embodiment; and
FIG. 7 schematically depicts a cross-sectional view of a detail of the engagement between the kitchen appliance of FIG. 1 and the kitchen appliance accessory of FIG. 2.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

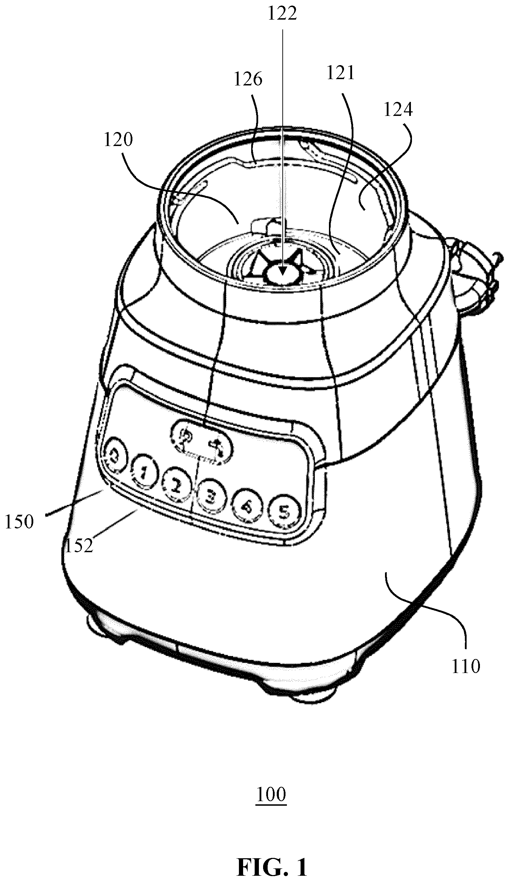

FIG. 1 schematically depicts a kitchen appliance 100 according to an example embodiment of the present invention. In FIG. 1, the kitchen appliance 100 is a blender although it should be understood that the kitchen appliance 100 may take any suitable shape or form, e.g. a food processor or the like. The kitchen appliance 100 comprises a body 110 on top of which a recess 120 for receiving a kitchen appliance accessory is formed. The recess 120 may receive any suitable type of kitchen appliance accessory, e.g. a blender jug, and so on. At the bottom of the recess 120, i.e. at a main surface 121, a coupling member 122 is coupled to a motor (not shown) of the kitchen appliance 100 through a drive shaft or the like. An inner sidewall 124 of the recess 120 may comprise a locking structure 126 such as a plurality of locking channels having one or more openings for receiving a locking rib or flange on outer surface of a kitchen appliance accessory to be locked into the recess 120, e.g. by aligning such locking ribs with the openings in the locking channels, after which the kitchen appliance accessory may be locked into place by rotating the kitchen appliance accessory relative to the recess 120, thereby locking the locking ribs or flanges into the locking channels. The locking channels may be formed in any suitable manner, e.g. by spatially separated opposing protrusions from the inner sidewall 124 of the recess 120. The locking channels may have any suitable shape, e.g. a tapered shape such that upon twisting the kitchen appliance accessory into place within the recess 120, the fit between the locking ribs on the kitchen appliance accessory and the locking channels is progressively tightened.

The kitchen appliance 100 further comprises a user interface on the body 110, which the user interface may take any suitable shape or form. For example, the user interface may include an on/off switch 150 and one or more buttons 152 for operating the kitchen appliance 100 e.g. for selecting the mode of operation of the kitchen appliance 100, for selecting a speed of the motor of the kitchen appliance 100, and so on. Of course, this embodiment of the user interface is by way of non-limited example only as the user interface may take any suitable shape and may include any of one or more dials, knobs, buttons, switches, touch screen, and so on.

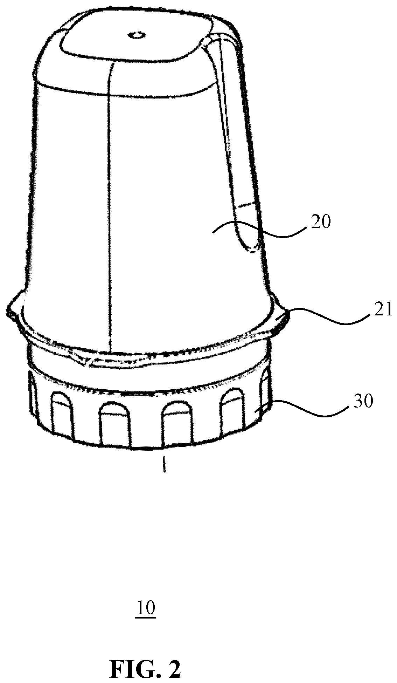

FIG. 2 schematically depicts a kitchen appliance accessory 10 for use with the kitchen appliance 100. The kitchen appliance accessory 10 comprises a first housing portion 20 engaged with a second housing portion 30, which may be disengaged from each other, i.e. the kitchen appliance accessory 10 may be disassembled, for cleaning purposes for example. The first housing portion 20 and the second housing portion 30 may be made of any suitable material, e.g. a plastic material, aluminium, stainless steel, glass or any combination thereof. The kitchen appliance accessory 10 may take any suitable form, for example the kitchen appliance accessory 10 may be a mill accessory in which the first housing portion 20 acts as a cup for holding a food product and the second housing portion 30 comprises a blade arrangement to be driven by the motor of the kitchen appliance 100, which blade arrangement is presented to the food product within the cup such that during operation of the blade arrangement with the motor of the kitchen appliance 100, the food product within the kitchen appliance accessory 10 may be chopped or otherwise milled by the blade arrangement.

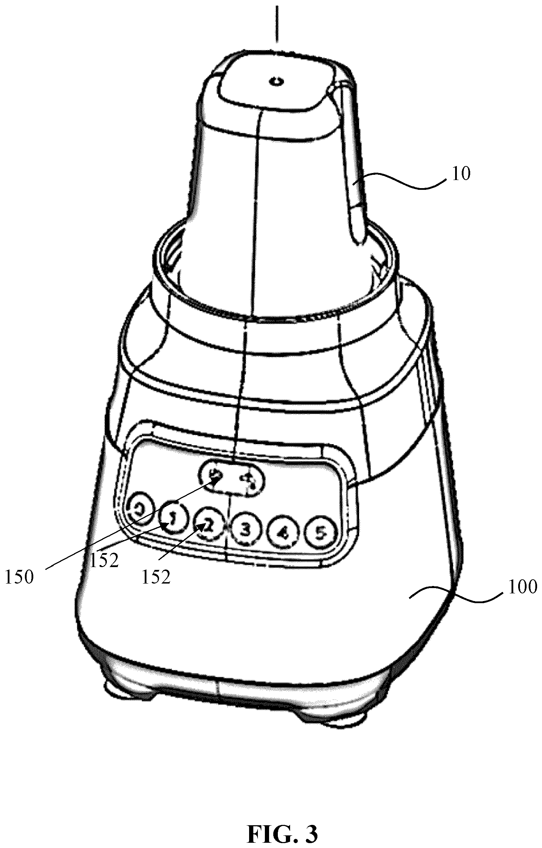

The first housing portion 20 typically comprises an arrangement of locking ribs or flanges 21 around its outer surface for engaging with the locking structure 126 on the inner surface 124 of the recess 120 of the kitchen appliance 100. As explained above, after engagement of the first housing portion 20 of the kitchen appliance accessory 10 with its second housing portion 30, the kitchen appliance accessory 10 may be positioned into the recess 120 of the kitchen appliance 100 with the second housing portion 30 facing the recess 120 as schematically depicted in FIG. 3, such that by twisting the kitchen appliance accessory 10 relative to the recess 120, its locking ribs 21 may be twisted into the locking structure 126, e.g. locking channels, within the recess 120 kitchen appliance such as to secure or lock the kitchen appliance accessory 10 within the recess 120.

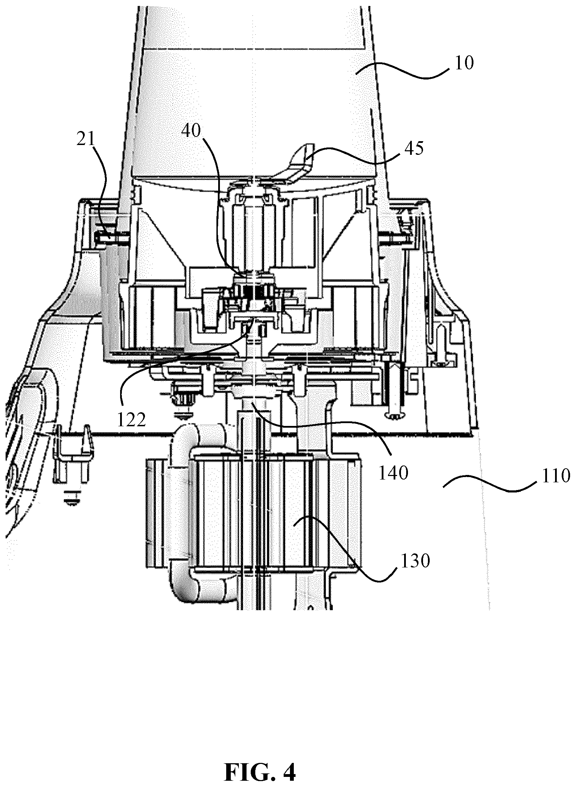

FIG. 4 schematically depicts a cross-sectional view of the engagement between the kitchen appliance 100 and the kitchen appliance accessory. As can be seen in FIG. 4, the motor 130 of the kitchen appliance 100 within its body 110 is mechanically coupled to the coupling member 122 in the recess 120 by a driveshaft 140, such that upon engagement of the motor 130 the coupling member 122 is driven by the motor 130 through the driveshaft 140. A gearbox (not shown) may also be present in the mechanical coupling between the motor 130 and the coupling member 122. Any suitable mechanical coupling between the motor 130 and the coupling member 122 may be used.

The coupling member 122 in the recess 120 engages with a coupling member 40 at the bottom of the second housing portion 30 of the kitchen appliance accessory 10, which coupling member 40 is mechanically coupled to a blade arrangement 45 within the second housing portion 30 for chopping or milling a food product contained within the kitchen appliance accessory 10. During operation of the motor 130 of the kitchen appliance 100, the blade arrangement 45 is driven by the motor 130 through the engagement between the coupling members 40 and 122. The respective coupling members 40, 122 and the blade arrangement 45 may take any suitable shape and may be made of any suitable material. As such coupling members and blade arrangements are well-known per se, this will not be explained in further detail for the sake of brevity only.

Upon engagement of the kitchen appliance accessory 10 with the kitchen appliance 100, the first housing portion 20 of the kitchen appliance accessory 10 is locked in the recess 120 of the kitchen appliance 100 by engagement of the locking ribs 21 with the locking structure 126 as previously explained. Consequently, during operation of the kitchen appliance 100, the first housing portion 20 of the kitchen appliance accessory 10 cannot easily move relative to the kitchen appliance 100, i.e. the first housing portion 20 of the kitchen appliance accessory 10 is stationary during such operation. However, vibrations caused by the motor 130 for example may cause a displacement of the second housing portion 30 of the kitchen appliance accessory 10 relative to its first housing portion 20, i.e. the second housing portion 30 may attempt to disengage from the first housing portion 20.

In order to prevent full disengagement of the second housing portion 30 from the first housing portion 20 during operation of the kitchen appliance accessory 10 on the kitchen appliance 100, the first housing portion 20 and the second housing portion 30 are equipped with slanted engagement members that rotation or twisting of the second housing portion 30 relative to the first housing portion 20 or vice versa when assembling the kitchen appliance accessory 10 causes the second housing portion 30 to move towards the first housing portion 20 by a vertical displacement distance A. The thus assembled kitchen appliance accessory 10 when fitted in the recess 120 of the body 110 of the kitchen appliance 100 by engagement of the locking ribs 21 with the locking structure 126 as previously explained has a clearance between the bottom outer surface of the second housing portion 30 and the main surface 121 of the recess 120 facing this bottom outer surface having a clearance height B that is smaller than the vertical displacement distance A. In order for the second housing portion 30 to fully disengage from the first housing portion 20 when the kitchen appliance accessory 10 is locked into the recess 120, the second housing portion 30 must rotate relative to the secured first housing portion 20, and must vertically drop relative to the first housing portion 20 by the vertical displacement distance A. However, because the clearance height B is smaller than the vertical displacement distance A, the bottom outer surface of the second housing portion 30 will collide with the main surface 121 of the recess 120 facing this bottom outer surface before the second housing portion 30 can fully disengage from the secured first housing portion 20, thus preventing full disengagement of the second housing portion 30 from the first housing portion 20 when the kitchen appliance accessory is locked into the recess 120 of the kitchen appliance. The clearance height B for instance may be defined by the vertical positioning of the locking ribs 21 on the outer surface of the first housing portion 20, as will be readily understood by the skilled person.

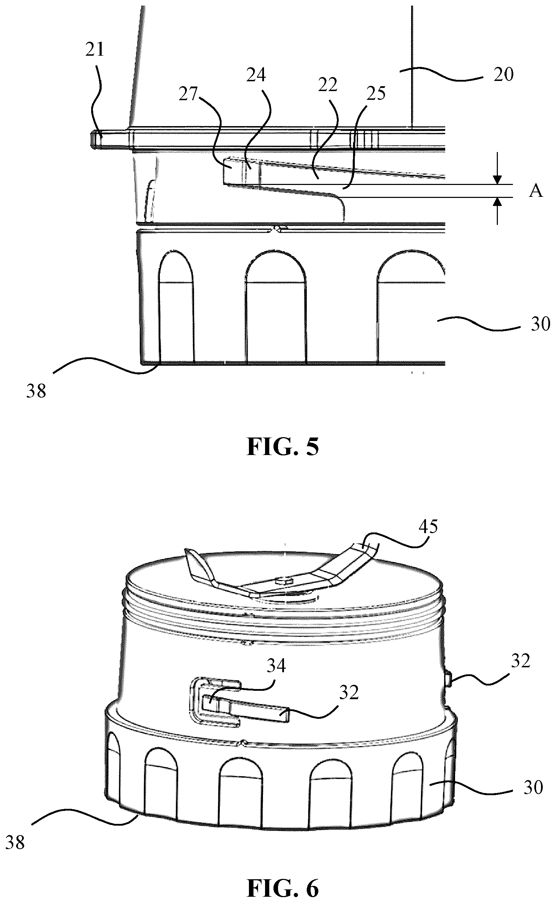

FIG. 5 schematically depicts a transparent view of part of the kitchen appliance accessory 10 according to an example embodiment. In this embodiment, the inner surface of the first housing portion 20 of the kitchen appliance accessory 10 comprises a plurality of slanted locking slots 22 extending between an opening or entry point 25 and an end point 27 laterally displaced relative to the opening or entry point 25. The vertical or longitudinal height difference between the lowest point of the opening 25 and the lowest point of the end point 27 defines the vertical displacement distance A over which the slanted engagement member of the second housing portion 30 has to travel through the slanted locking slot 22 when rotationally engaging the second housing portion 30 with the first housing portion 20. As previously explained, such an assembly of the kitchen appliance accessory 10 may be achieved by holding the first housing portion 20 with its opening upwards and dropping the second housing portion 30 into this opening, after which the second housing portion 30 may be engaged with the first housing portion 20 by (clockwise) twisting the second housing portion 30 relative to the first housing portion 20 to ensure that a clearance height B between the bottom surface 38 and a main surface of the recess 120 facing the bottom surface 38 is less than the vertical displacement distance A as previously explained.

FIG. 6 schematically depicts the second housing portion 30 according to an example embodiment, in which the second housing portion 30 carries a plurality of slanted locking ribs 32 on its outer surface under the same slant angle as the slanted locking slots on the first housing portion 20, such that upon rotational engagement of the second housing portion 30 with the first housing portion 20, each slanted locking rib 32 is inserted into a corresponding slanted locking slot 22, with the engagement complete when the slanted locking ribs 32 hit the end points 27 of the slanted locking slots 22, at which point the second housing portion 30 has travelled towards the first housing portion 20 by the vertical displacement distance A. Of course, it should be understood that alternative engagement arrangements are equally applicable. For example, the slanted locking slots 22 may be located on the outer surface of the second housing portion 30 and the slanted locking ribs 32 may be located on the inner surface of the first housing portion 20. Moreover, structures equivalent to the slanted locking ribs and slanted locking slots may be used instead, as will be immediately apparent to the skilled person. The first housing portion 20 and the second housing portion 30 may carry any suitable number of slanted locking slots 20 and slanted locking ribs 30, e.g. three or four slanted locking slots 20 and slanted locking ribs 30.

In an embodiment, a slanted locking slot 20 further comprises a groove 24 near the end point 27 for engaging with a tongue 34 at the end of a slanted locking rib 32. Of course, the groove 24 and the tongue 34 may be interchanged such that the tongue 34 is located in the slanted locking slot 20 and the groove 24 is located in the slanted locking rib 32. Upon completion of the assembly of the kitchen appliance accessory 10 through rotational engagement of the second housing portion 30 with the first housing portion 20, the tongue 34 slots into the groove 24, such that a moderate rotational force (e.g. an anticlockwise rotational force) has to be applied in order to dislodge the tongue 34 from the groove 24 when disassembling the kitchen appliance accessory 10. This therefore further reduces the risk of accidental disassembly of the kitchen appliance accessory 10 by disengagement of the second housing portion 30 from the first housing portion 20, e.g. when locked into the recess 120 of the body 110 of the kitchen appliance 100.

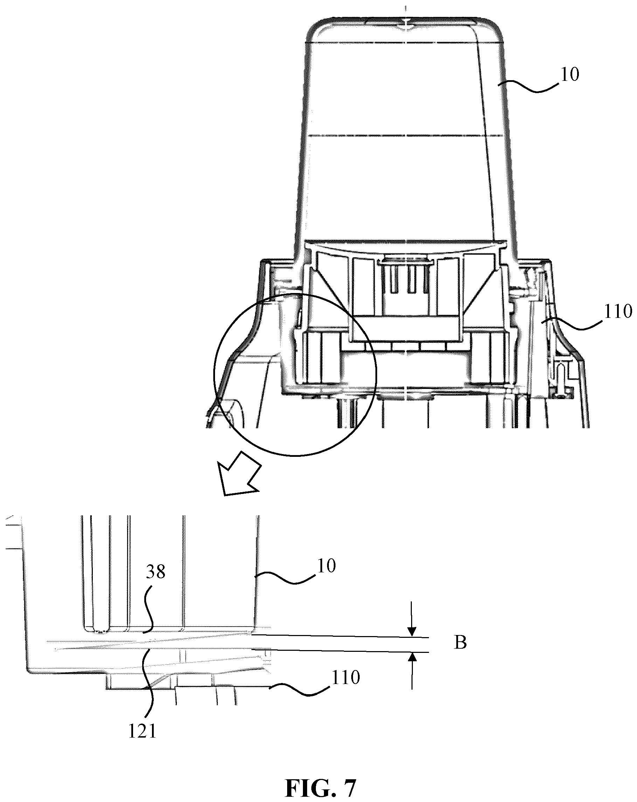

FIG. 7 schematically depicts the clearance height B between the bottom surface 38 of the second housing portion 30 and the main surface 121 of the recess 120 on top of the body 110 of the kitchen appliance 100, which main surface 121 faces the bottom surface 38 as previously explained. To prevent accidental disengagement of the second housing portion 30 from the first housing portion 20 when the first housing portion 20 is locked into the recess 120 by engagement of the locking ribs 21 with the locking structures 126, the clearance height B is smaller than the vertical displacement distance A as previously explained. In an example embodiment, A-B is in a range of 0.2 - 0.6 mm. For example, A may be 1.7 mm and B may be 1.3 mm although other values are of course equally feasible.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A kitchen appliance (100) comprising a main body (110) and a kitchen appliance accessory (10) for engaging with the main body (110), the kitchen appliance accessory comprising:
a first housing portion (20) comprising an inner surface carrying first slanted engagement members (22) and an outer surface carrying a plurality of locking ribs (21) for locking the kitchen appliance accessory onto the main body (110) of the kitchen appliance (100); and
a second housing portion (30) comprising an outer surface carrying further slanted engagement members (32) and a bottom surface opposing a main surface of said main body and separated from said main surface by a clearance having a clearance height (B) when the kitchen appliance accessory is locked onto said main body;
wherein the second housing portion is rotatably lockable onto the first housing portion by engagement of the first slanted engagement members with the further slanted engagement members, **characterized in that** said engagement causes a vertical displacement of the second housing portion towards the first housing portion by a vertical displacement distance (A) exceeding said clearance height (B).

2. The kitchen appliance (100) of claim 1, wherein a first slanted engagement member (22) comprises one of a slanted locking rib and a slanted locking slot for receiving said slanted locking rib and a further slanted engagement member (32) comprises the other of said slanted locking slot and said slanted locking rib.

3. The kitchen appliance (100)of claim 2, wherein said slanted locking slot comprises an opening (25) for receiving the slanted locking rib and an end point (27) for engaging with said slanted locking rib at completion of said engagement, wherein the end point is laterally displaced relative to said opening and longitudinally separated from said opening by said vertical displacement distance (A).

4. The kitchen appliance (100) of claim 3, wherein said slanted locking slot comprises one of a tongue (34) and a groove (24) for receiving said tongue at said end point, and the slanted locking rib comprises the other of said tongue and said groove.

5. The kitchen appliance (100) of any of claims 2-4, wherein the slanted locking slots are arranged on the inner surface of the first housing portion (20) and the slanted locking ribs are arranged on the outer surface of the second housing portion (30).

6. The kitchen appliance (100) of any of claims 1-5, wherein a difference between said clearance height (B) and said vertical displacement distance (A) is in a range of 0.2 - 0.6 mm.

7. The kitchen appliance (100) of any of claims 1-6, wherein the first housing portion (20) is a cup for receiving a food product.

8. The kitchen appliance (100) of any of claims 1-7, wherein the second housing portion (30) contains a blade arrangement (45) to be driven by a motor (130) within the kitchen appliance (100) and the bottom surface (38) of said second housing portion comprises a coupling member (40) coupled to said blade arrangement for engaging with said motor.

9. The kitchen appliance (100) of any of claims 1-8, wherein the kitchen appliance accessory is a mill accessory.

10. The kitchen appliance (100) of any of claims 1-9, wherein the main body (110) has a recess (120) for receiving the kitchen appliance accessory (10).

11. The kitchen appliance (100) of claim 10, said recess (120) comprising a main surface (121) facing the bottom surface (38) of the second housing portion (30) and being separated therefrom by said clearance height (B) when said kitchen appliance accessory (10) is locked into the kitchen appliance.

12. The kitchen appliance (100) of claim 10 or 11, wherein said recess (120) comprises a locking structure (126) on an inner surface (124) of said recess for engaging with the locking ribs (21) on the kitchen appliance accessory (10) for locking the kitchen appliance accessory into said recess.

13. The kitchen appliance (100) of claim 12, wherein the locking structure (126) comprises a plurality of locking channels.

14. The kitchen appliance (100) of any of claims 10-13, further comprising a first coupling (122) in said recess (120) coupled to a motor (130) of the kitchen appliance, wherein said first coupling is arranged to engage with the coupling member (40) of the bottom surface (38) of the second housing portion (30) of the kitchen appliance accessory (10) such as to drive the blade arrangement (45) of the kitchen appliance accessory with said motor.

15. The kitchen appliance (100) of any of claims 10-14, wherein the kitchen appliance is a blender or a food processor.

## Patentansprüche

1. Ein Küchengerät (100), umfassend ein Hauptgehäuse (110) und ein Küchengeräte-Zubehör (10) zum Eingriff in das Hauptgehäuse (110), Das Küchengerät umfasst: einen ersten Gehäuseabschnitt (20), umfassend eine innere Oberfläche, die erste geneigte Eingriffselemente (22) trägt, und eine äußere Oberfläche, die eine Vielzahl von Verriegelungsrippen (21) trägt, um das Küchengerätezubehör auf dem Hauptkörper (110) des Küchengeräts zu verriegeln (100); und einen zweiten Gehäuseabschnitt (30), der eine weitere geneigte Eingriffselemente (32) tragende Außenfläche und eine Bodenfläche umfasst, die einer Hauptfläche des Hauptkörpers gegenüberliegt und von der Hauptfläche durch einen Zwischenraum mit einer Zwischenraumhöhe (B) getrennt ist, wenn der Küchengerätezubehör an dem Hauptkörper verriegelt wird; wobei der zweite Gehäuseabschnitt drehbar auf dem ersten Gehäuseabschnitt durch Eingriff der ersten geneigten Eingriffselemente mit den weiteren geneigten Eingriffselementen verriegelbar ist, **dadurch gekennzeichnet, dass** der Eingriff eine vertikale Verschiebung des zweiten Gehäuseabschnitts zu dem ersten Gehäuseabschnitt um einen vertikalen Verschiebungsabstand (A) bewirkt, der die Zwischenraumhöhe (B) überschreitet.

2. Küchengerät (100) von Anspruch 1, wobei ein erstes geneigtes Eingriffselement (22) eines von einer geneigten Verriegelungsrippe und einem geneigten Verriegelungsschlitz zur Aufnahme der besagten geneigten Verriegelungsrippe umfasst, und ein weiteres geneigtes Eingriffselement (32) umfasst das andere des besagten geneigten Verriegelungsschlitzes und der besagten geneigten Verriegelungsrippe.

3. Küchengerät (100) nach Anspruch 2, wobei der besagte geneigte Verriegelungsschlitz eine Öffnung (25) zum Aufnehmen der geneigten Verriegelungsrippe und einen Endpunkt (27) zum Eingriff mit der besagten geneigten Verriegelungsrippe bei Abschluss des Eingriffs umfasst, wobei der Endpunkt seitlich relativ zu der Öffnung verschoben und in Längsrichtung von der Öffnung um den vertikalen Verschiebungsabstand (A) getrennt ist.

4. Küchengerät (100) von Anspruch 3, wobei der besagte geneigte Verriegelungsschlitz eines von einer Zunge (34) und einer Nut (24) umfasst, um die besagte Zunge am besagten Endpunkt aufzunehmen, und die geneigte Verriegelungsrippe umfasst das andere von besagter Zunge und besagter Nut.

5. Küchengerät (100) von einem der Ansprüche 2-4, wobei die geneigten Verriegelungsschlitze auf einer inneren Oberfläche des ersten Gehäuseabschnitts (20) angeordnet sind, und die geneigten Verriegelungsrippen sind auf der äußeren Oberfläche des zweiten Gehäuseabschnitts (30) angeordnet.

6. Küchengerät (100) von einem der Ansprüche 1-5, wobei ein Unterschied zwischen der besagten Zwischenraumhöhe (B) und der besagten vertikalen Verschiebungshöhe (A) sich in einem Bereich von 0,2-0,6 mm befindet.

7. Küchengerät (100) von einem der Ansprüche 1-6, wobei der erste Gehäuseabschnitt (20) ein Becher zur Aufnahme von Lebensmitteln ist.

8. Küchengerät (100) nach einem der Ansprüche 1-7, wobei der zweite Gehäuseabschnitt (30) eine Klingenanordnung (45) enthält, die durch einen Motor (130) innerhalb des Küchengeräts (100) angetrieben wird, und die Bodenfläche (38) des zweiten Gehäuseabschnitts umfasst ein Kopplungselement (40), das mit der Klingenanordnung zum Eingriff mit dem besagten Motor gekoppelt ist.

9. Küchengerät (100) von einem der Ansprüche 1-8, wobei das Küchengerätezubehör ein Mahlwerk ist.

10. Küchengerät (100) von einem der Ansprüche 1-9, wobei das Hauptgehäuse (110) eine Vertiefung (120) zur Aufnahme des Küchengerätezubehörs (10) besitzt.

11. Küchengerät (100) nach Anspruch 10, wobei die besagte Vertiefung (120) eine Hauptfläche (121) umfasst, die der Bodenfläche (38) des zweiten Gehäuseabschnitts (30) zugewandt ist und von dieser durch die besagte Zwischenraumhöhe (B) getrennt ist, wenn besagtes Küchengerätezubehör (10) in das Küchengerät eingerastet ist.

12. Küchengerät (100) nach Anspruch 10 oder 11, wobei die besagte Vertiefung (120) eine Verriegelungsstruktur (126) auf einer Innenfläche (124) der besagten Vertiefung zum Eingriff mit den Verriegelungsrippen (21) an dem Küchengerätezubehör (10) zum Verriegeln des Küchengerätezubehörs in der besagten Vertiefung umfasst.

13. Küchengerät (100) von Anspruch 12, wobei die Verriegelungsstruktur (126) eine Vielzahl von Verriegelungskanälen umfasst.

14. Küchengerät (100) nach einem der Ansprüche 10-13, ferner umfassend eine erste Kupplung (122) in der besagten Vertiefung (120), die mit einem Motor (130) des Küchengeräts gekoppelt ist, wobei die besagte erste Kupplung so angeordnet ist, dass sie mit dem Kupplungselement (40) der Bodenfläche (38) des zweiten Gehäuseabschnitts (30) des Küchengerätezubehörs (10) in Eingriff kommt, um die Klingenanordnung (45) des Küchengerätezubehörs mit dem besagten Motor anzutreiben.

15. Küchengerät (100) von einem der Ansprüche 10-14, wobei das Küchengerätezubehör ein Rührwerk oder eine Küchenmaschine ist.

## Revendications

1. Appareil de cuisine (100) comprenant un corps principal (110) et un accessoire pour appareil de cuisine (10) destiné à s'engager avec le corps principal (110), l'accessoire pour appareil de cuisine comprenant:
une première partie de boîtier (20) comprenant une surface intérieure portant des premiers éléments d'engagement inclinés (22) et une surface extérieure portant une pluralité de nervures de verrouillage (21) pour verrouiller l'accessoire pour appareil de cuisine sur le corps principal (110) de l'appareil de cuisine (100); et
une deuxième partie de boîtier (30) comprenant une surface extérieure portant d'autres éléments d'engagement inclinés (32) et une surface inférieure opposée à une surface principale dudit corps principal et séparée de ladite surface principale par un jeu ayant une hauteur de jeu (B) lorsque l'accessoire pour appareil de cuisine est verrouillé sur ledit corps principal;
dans lequel la deuxième partie de boîtier peut être verrouillée en rotation sur la première partie de boîtier par engagement des premiers éléments d'engagement inclinés avec les autres éléments d'engagement inclinés, **caractérisé en ce que** ledit engagement provoque un déplacement vertical de la deuxième partie de boîtier vers la première partie de boîtier sur une distance de déplacement vertical (A) dépassant ladite hauteur de dégagement (B).

2. Appareil de cuisine (100) selon la revendication 1, dans lequel un premier élément d'engagement incliné (22) comprend l'une d'une nervure de verrouillage inclinée et d'une fente de verrouillage inclinée pour recevoir ladite nervure de verrouillage inclinée et un autre élément d'engagement incliné (32) comprend l'autre de ladite fente de verrouillage inclinée et de ladite nervure de verrouillage inclinée.

3. Appareil de cuisine (100) selon la revendication 2, dans lequel ladite fente de verrouillage inclinée comprend une ouverture (25) pour recevoir la nervure de verrouillage inclinée et un point d'extrémité (27) pour s'engager avec ladite nervure de verrouillage inclinée à la fin dudit engagement, dans lequel le point d'extrémité est déplacé latéralement par rapport à ladite ouverture et séparé longitudinalement de ladite ouverture par ladite distance de déplacement vertical (A).

4. Appareil de cuisine (100) selon la revendication 3, dans lequel ladite fente de verrouillage inclinée comprend l'une d'une languette (34) et d'une rainure (24) pour recevoir ladite languette au niveau dudit point d'extrémité, et la nervure de verrouillage inclinée comprend l'autre de ladite languette et de ladite rainure.

5. Appareil de cuisine (100) selon l'une quelconque des revendications 2 à 4, dans lequel les fentes de verrouillage inclinées sont disposées sur la surface intérieure de la première partie de boîtier (20) et les nervures de verrouillage inclinées sont disposées sur la surface extérieure de la deuxième partie de boîtier (30).

6. Appareil de cuisine (100) selon l'une quelconque des revendications 1 à 5, dans lequel une différence entre ladite hauteur de dégagement (B) et ladite distance de déplacement vertical (A) est dans une plage de 0,2 à 0,6 mm.

7. Appareil de cuisine (100) selon l'une quelconque des revendications 1 à 6, dans lequel la première partie de boîtier (20) est une tasse destinée à recevoir un produit alimentaire.

8. Appareil de cuisine (100) selon l'une quelconque des revendications 1 à 7, dans lequel la deuxième partie de boîtier (30) contient un agencement de lame (45) destiné à être entraîné par un moteur (130) à l'intérieur de l'appareil de cuisine (100) et la surface inférieure (38) de ladite deuxième partie de boîtier comprend un élément de couplage (40) couplé audit agencement de lame pour s'engager avec ledit moteur.

9. Appareil de cuisine (100) selon l'une quelconque des revendications 1 à 8, dans lequel l'accessoire pour appareil de cuisine est un accessoire moulin.

10. Appareil de cuisine (100) selon l'une quelconque des revendications 1 à 9, dans lequel le corps principal (110) présente un évidement (120) pour recevoir l'accessoire pour appareil de cuisine (10).

11. Appareil de cuisine (100) selon la revendication 10, ledit évidement (120) comprenant une surface principale (121) faisant face à la surface inférieure (38) de la deuxième partie de boîtier (30) et étant séparé de celle-ci par ladite hauteur de dégagement (B) lorsque ledit accessoire pour appareil de cuisine (10) est verrouillé dans l'appareil de cuisine.

12. Appareil de cuisine (100) selon la revendication 10 ou 11, dans lequel ledit évidement (120) comprend une structure de verrouillage (126) sur une surface intérieure (124) dudit évidement pour s'engager avec les nervures de verrouillage (21) sur l'accessoire pour appareil de cuisine (10) pour verrouiller l'accessoire pour appareil de cuisine dans ledit évidement.

13. Appareil de cuisine (100) selon la revendication 12, dans lequel la structure de verrouillage (126) comprend une pluralité de canaux de verrouillage.

14. Appareil de cuisine (100) selon l'une quelconque des revendications 10 à 13, comprenant en outre un premier couplage (122) dans ledit évidement (120) couplé à un moteur (130) de l'appareil de cuisine, dans lequel ledit premier couplage est agencé pour s'engager avec l'élément de couplage (40) de la surface inférieure (38) de la deuxième partie de boîtier (30) de l'accessoire pour appareil de cuisine (10) de manière à entraîner l'agencement de lame (45) de l'accessoire pour appareil de cuisine avec ledit moteur.

15. Appareil de cuisine (100) selon l'une quelconque des revendications 10 à 14, dans lequel l'appareil de cuisine est un mixeur ou un robot ménager.
